# EUROPÄISCHE PATENTANMELDUNG

(11) **EP 4 223 402 A1**
(43) Veröffentlichungstag der Anmeldung: **09.08.2023**
(21) Anmeldenummer: 22209317.1
(22) Anmeldetag: 24.11.2022
(51) Int. Cl.: B01F 27/9212, B01F 27/922, B01F 33/502, A01K 5/00

(54) **FUTTERMISCHER MIT VERBESSERTER MISCHSCHNECKE**

(30) Priorität: 02.02.2022 DE 202022100590 U
(71) Anmelder: Trioliet B.V., 7575 BW Oldenzaal (NL)
(72) Erfinder: Liet, Robert, 7573 CS Oldenzaal (NL)
(74) Vertreter: Grünecker Patent- und Rechtsanwälte PartG mbB

(57) **Zusammenfassung**

Die Erfindung stellt einen Futtermischer (1) zum Mischen von Futter bereit umfassend einen Mischbehälter (2) zur Aufnahme von Futter, wobei der Mischbehälter (2) einen Boden (5) und eine sich vom Boden (5) nach oben erstreckende Wandung aufweist, wobei der Mischbehälter (2) wenigstens eine im Mischbehälter (2) drehbar angeordnete Mischschnecke (10a, 10b) umfasst, wobei die wenigstens eine Mischschnecke (10a, 10b) um eine vertikale Achse (11a, 11b) drehend antreibbar ist, dadurch gekennzeichnet, dass die Ganghöhe (18a, 18b) der wenigstens einen Mischschnecke (10a, 10b) nach oben hin zunimmt.

## Beschreibung

Die Erfindung bezieht sich auf einen Futtermischer zum Mischen von Futter gemäß Oberbegriff des Anspruchs 1.

Futtermischer finden in der Landwirtschaft zunehmend Verbreitung und umfassen einen Mischbehälter, in dem wenigstens ein Mischwerkzeug bewegt wird, um Futter zu mischen. Der Mischbehälter weist üblicherweise einen Boden und eine sich im Wesentlichen konisch erweiternde Vorderwand und Rückwand sowie meist abgeflachte Seitenwände auf. Des Weiteren ist der Mischbehälter an seiner nach oben weisenden Seite offen, so dass er durch diese Öffnung beladen werden kann. Das Mischwerkzeug ist üblicherweise als Mischschnecke ausgebildet, die sich nach oben hin verjüngt und um eine vertikale Achse derart angetrieben wird, dass das eingefüllte Futter nach oben gefördert wird und wieder zurück auf den Boden des Mischbehälters fließt, wo es wieder dem Mischwerkzeug zugeführt wird. Auf diese Weise wird das Futter durchmischt und aufgelockert. Ein derartiger Futtermischer ist beispielsweise aus der EP 1 527 678 A1 bekannt.

Bei den bekannten Futtermischern ist die Ganghöhe der verwendeten Mischschnecken konstant.

Obwohl bekannte Futtermischer eine gute Durchmischung erlauben, ist die Auflockerung des Futters zuweilen nicht zufriedenstellend.

Aufgabe der Erfindung ist es daher, einen Futtermischer der eingangs genannten Art bereitzustellen, der für eine bessere Auflockerung des Futters sorgt.

Diese Aufgabe wird durch einen Futtermischer gemäß Anspruch 1 gelöst. Vorteilhafte Weiterbildungen finden sich in den Unteransprüchen.

Die Erfindung stellt also einen Futtermischer zum Mischen von Futter bereit, umfassend einen Mischbehälter zur Aufnahme von Futter, wobei der Mischbehälter einen Boden und eine sich vom Boden nach oben erstreckende Wandung aufweist, wobei der Mischbehälter wenigstens eine im Mischbehälter drehbar angeordnete Mischschnecke umfasst, wobei die wenigstens eine Mischschnecke um eine vertikale Achse drehend antreibbar ist, und wobei die Ganghöhe der wenigstens einen Mischschnecke nach oben hin zunimmt.

Es hat sich gezeigt, dass eine solche Mischschnecke beim Transport des Futters nach oben mehr Luft in das Futter einbringt und somit zu einer besseren Auflockerung des Futters führt. Auch hat sich gezeigt, dass eine solche Mischschnecke unter gleichen Bedingungen mehr Futter transportieren kann und somit eine schnellere Durchmischung und gegebenenfalls Schneiden des Futters möglich ist.

Es können insbesondere auch mehr als eine Mischschnecke vorgesehen sein, beispielsweise zwei oder drei Mischschnecken. Die nachfolgend für eine Mischschnecke beschriebenen Merkmale können bei Futtermischern mit mehreren Mischschnecken insbesondere für alle Mischschnecken gelten. Es ist aber auch denkbar, dass Mischschnecken eines Futtermischers unterschiedlich ausgebildet sind.

Die sich vom Boden nach oben erstreckende Wandung kann insbesondere eine in Fahrtrichtung gesehen Vorderwand, Rückwand und zwei Seitenwände umfassen. Die Vorderwand und die Rückwand können sich konisch nach oben hin erweitern. Die Seitenwände können Abflachungen umfassen. Durch die Abflachungen können engere Stallgassen durchfahren werden.

Unter dem Begriff "Ganghöhe" wird hierin die Strecke verstanden, um die sich das Schneckengewinde der Mischschnecke nach einer Drehung um einen vorherbestimmten Winkel, insbesondere einer 180° oder einer 360° Drehung, nach oben windet. Als "Drehung" kann dabei eine gedachte Verschiebung eines Punktes des Schneckengewindes entlang des Schneckengewindes um den vorherbestimmten Winkel bezeichnet werden. Die Ganghöhe kann insbesondere auch kontinuierlich angegeben werden. Mit anderen Worten kann für jeden Punkt der Windung eine Ganghöhe angegeben werden als die Strecke, um die sich das Schneckengewinde nach einer vorherbestimmten Drehung bis zu diesem Punkt, insbesondere einer 180° oder einer 360° Drehung, nach oben gewunden hat. Für den Vergleich zweier oder mehrerer Werte für die Ganghöhe wird zur Bestimmung der jeweiligen Ganghöhe dieselbe Drehung herangezogen. Die Ganghöhe kann insbesondere auch als "Hub" oder "Steigung" bezeichnet werden.

Die Ganghöhe der Mischschnecke kann nach oben hin insbesondere derart zunehmen oder variieren, dass wenigstens eine Ganghöhe größer ist als eine oder mehrere, insbesondere alle, darunterliegenden Ganghöhen. Insbesondere kann jede Ganghöhe der Mischschnecke größer sein als alle darunterliegenden Ganghöhen.

Insbesondere kann die Ganghöhe stetig und/oder schrittweise zunehmen. Bei einer stetigen oder kontinuierlichen Zunahme kann eine besonders gleichmäßige Vermischung stattfinden. Eine schrittweise Zunahme kann konstruktiv einfacher sein. Bei einer schrittweisen Zunahme können insbesondere eine oder mehrere Windungen mit einer ersten Ganghöhe und darüber eine oder mehrere Windungen mit einer zweiten, größeren Ganghöhe vorgesehen sein. Die Ganghöhe kann auch abschnittsweise stetig und abschnittsweise schrittweise zunehmen.

Insbesondere kann die Zunahme der Ganghöhe in einem oder in mehreren Schritten erfolgen.

Windet sich die Mischnecke um 360 Grad nach oben spricht man auch von einer Windung. Die Ganghöhe kann auch als Höhe einer Windung angesehen werden. Als Referenz oder Nulllinie für die erste Windung kann hierin eine Gerade verwendet werden, welche den Übergang des Schneckengewindes zum Boden der Mischkammer umfasst.

Die Mischschnecke kann eine einfache Helix umfassen. Mit anderen Worten kann genau ein Gewindegang pro Mischschnecke vorgesehen sein. Insbesondere kann also vorgesehen sein, dass die Mischschnecke keine Doppelhelix umfasst, also insbesondere kein zweigängiges Schneckengewinde umfasst.

Das zentrale, sich vom Boden des Mischbehälters nach oben erstreckende Element der Mischschnecke kann als Schneckenturm bezeichnet werden. Der Schneckenturm kann die Welle der Mischschnecke darstellen oder umfassen. Der Schneckenturm kann auch als Schneckenwelle oder Schneckenrohr bezeichnet werden. Die Schneckenblätter können insbesondere am Schneckenturm befestigt sein. Die Schneckenblätter können auch als Flanken bezeichnet werden.

Das Fördervolumen einer Mischschnecke beschreibt den von der Mischschnecke in einer Windung nach oben transportierbaren maximalen Rauminhalt zwischen gegenüberliegend angeordneten, einander zugewandten Schneckenblätter der Mischschnecke.

Die Querschnittsfläche des Fördervolumens kann der Querschnittsfläche durch die Mittellinie des Schneckenturms entsprechen, die begrenzt wird durch jeweils gegenüberliegend angeordnete, einander zugewandte Schneckenblätter, der Verbindungslinie der äußersten Punkte der Schneckenblätter und dem Mantel des Schneckenturms.

Die Zunahme der Ganghöhe der wenigstens einen Mischschnecke kann bei jeder Windung um 10 - 100%, insbesondere um 20 - 80%, insbesondere um 25 - 40%, betragen. Dadurch lässt sich ein besonders vorteilhaftes Mischergebnis erreichen.

Die wenigstens eine Mischschnecke kann sich nach oben hin verjüngen. Mit anderen Worten kann der Außenradius oder Außendurchmesser der wenigstens einen Mischschnecke nach oben hin abnehmen. Insbesondere kann der Außenradius oder Außendurchmesser stetig oder schrittweise abnehmen.

Dabei kann die Zunahme der Ganghöhe der Verjüngung der wenigstens einen Mischschnecke kompensatorisch entgegenwirken, indem die Ganghöhe derart zunimmt, dass eine Querschnittfläche des Fördervolumens gleichbleibt oder zunimmt. Dadurch kann erreicht werden, dass das Futter beim Durchmischen weniger zusammengedrückt wird, so dass ein vorteilhaftes Mischergebnis erreicht werden kann.

Das Verhältnis von maximaler Ganghöhe zu minimaler Ganghöhe der wenigstens einen Mischschnecke kann zwischen 1,2 und 6, insbesondere zwischen 1,4 und 4, insbesondere zwischen 1,5 und 3, liegen.

Die Schneckenblätter der wenigstens einen Mischschnecke können flach oder beckenförmig ausgebildet sein. Zur Bestimmung der Ganghöhe können die Punkte der Schneckenblätter herangezogen werden, die den größten radialen Abstand zum Schneckenturm aufweisen. Diese Punkte können als Randpunkte oder Rand bezeichnet werden.

Der Futtermischer kann ein Futterroboter, ein Futtermischwagen oder eine stationäre Mischanlage sein. Unter einem Futtermischwagen kann eine Vorrichtung verstanden werden, die als Anhänger gezogen oder selbstfahrend ausgebildet ist. Der Futtermischwagen kann eine Austragsöffnung und einen Austragsförderer umfassen, so dass Futter aus der Mischkammer während der Fahrt aus der Mischkammer ausgebracht werden kann. Ein Futterroboter kann ebenfalls eine Austragsöffnung und einen Austragsförderer umfassen, so dass Futter aus der Mischkammer während der Fahrt aus der Mischkammer ausgebracht werden kann. Im Gegensatz zu einem Futtermischwagen bewegt sich ein Futterroboter jedoch automatisiert entlang eines vorgegebenen oder vorgebbaren Weges.

Der Schneckenturm der wenigstens einen Mischschnecke kann sich nach oben hin verjüngen. Dadurch kann insbesondere die Abnahme der Breite der Schneckenblätter der Mischschnecke, also deren radiale Erstreckung, nach oben hin bei sich verjüngender Mischschnecke reduziert werden. Insbesondere kann sich der Schneckenturm stetig oder schrittweise nach oben hin verjüngen.

Die Erfindung stellt außerdem einen Futtermischer zum Mischen von Futter bereit, umfassend einen Mischbehälter zur Aufnahme von Futter, wobei der Mischbehälter einen Boden und eine sich vom Boden nach oben erstreckende Wandung aufweist, wobei der Mischbehälter wenigstens eine im Mischbehälter drehbar angeordnete Mischschnecke umfasst, wobei die wenigstens eine Mischschnecke um eine vertikale Achse drehend antreibbar ist, und wobei die Ganghöhe der wenigstens einen Mischschnecke variabel ausgebildet ist.

Variabel kann dabei insbesondere bedeuten, dass die Ganghöhe in wenigstens einem Bereich des Schneckengewindes von der Ganghöhe in wenigstens einem anderen Bereich verschieden ist. Durch eine solche Variabilität kann das Mischergebnis optimiert werden.

Der Futtermischer kann dabei eines oder mehrere der oben genannten Merkmale aufweisen.

Weitere Merkmale und Vorteile der Erfindung werden nachfolgend anhand der beispielhaften Figuren beschrieben. Dabei zeigt:
- Fig. 1: einen Futtermischwagen in schematischer Darstellung in perspektivischer Draufsicht,
- Fig. 2: eine beispielhafte Mischschnecke in schematischer Darstellung,
- Fig. 3: eine schematisch dargestellte Mischschnecke mit konstanter Ganghöhe,
- Fig. 4: eine schematisch dargestellte Mischschnecke mit nach oben hin zunehmender Querschnittsfläche des Fördervolumens,
- Fig. 5: eine schematisch dargestellte Mischschnecke mit nach oben hin abnehmender Querschnittsfläche des Fördervolumens, und
- Fig. 6: einen schematischen Futtermischer in der Seitenansicht mit Blick in den Mischbehälter.

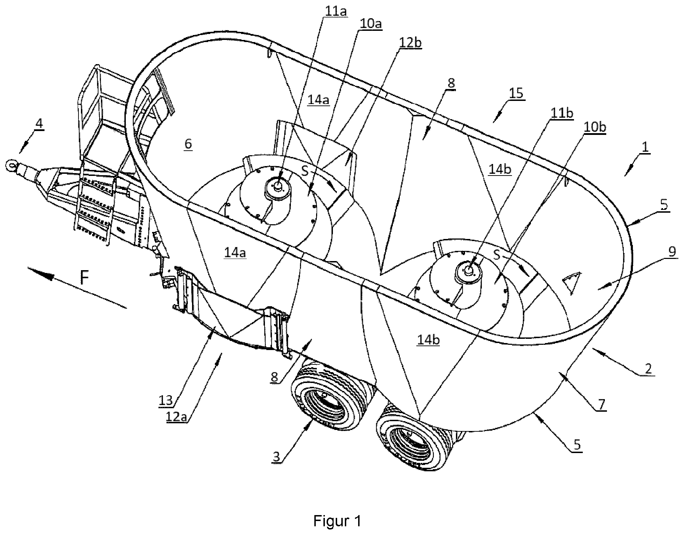

Figur 1 zeigt in schematischer Darstellung in perspektivischer Draufsicht einen Futtermischer 1, der als Futtermischwagen ausgebildet ist. Der Futtermischer 1 enthält einen oben offenen Mischbehälter 2 zur Aufnahme von Futter, der auf einem Fahrgestell 3 befestigt ist und mit Hilfe eines Zugfahrzeuges, wie beispielsweise eines Schleppers, in Fahrtrichtung F mittels der Zugdeichsel 4, z.B. in einer Stallgasse, verfahrbar ist. Der Mischbehälter 2 weist einen Boden 5, eine Vorderwand 6, eine Rückwand 7 und Seitenwände 8 auf. Vorderwand 6, Rückwand 7 und Seitenwände 8 bilden zusammen die Wandung des Mischbehälters 2. Über die obere Behälteröffnung 9 kann Futter in den Mischbehälter 2 eingebracht werden. Bei dem zu mischenden Futter kann es sich insbesondere um langfaseriges Futter, wie beispielsweise mit einem Ladewagen aufgenommene Silage oder Heu, handeln.

Im Inneren des Mischbehälters 2 sind zwei in Fahrrichtung F hintereinanderliegend angeordnete Mischschnecken 10a bzw. 10b vorgesehen. Die Mischschnecken 10a und 10b rotieren jeweils drehend um eine vertikale Achse 11a, 11b, die senkrecht zum Boden 5 verläuft. Mit anderen Worten sind die Mischschnecken 10a und 10b also als Vertikalschneckenförderer, kurz Vertikalschnecken, ausgebildet. Die Drehrichtung der beiden Mischschnecken 10a, 10b ist hier gleichsinnig und erfolgt hier in Richtung des Pfeiles S.

Neben der in Fahrtrichtung F vorderen Mischschnecke 10a, befinden sich zwei seitliche Austragsöffnungen 12a und 12b, die in Höhe der vertikalen Achse 11a und beidseitig der vertikalen Achse 11a diametral gegenüberliegend, angeordnet sind. Die beiden Austragsöffnungen 12a und 12b durchbrechen die Seitenwände 8 des Mischbehälters 2 und sind jeweils durch einen Schieber 13 verschließbar.

Beim Betrieb des Futtermischers wird das Futter über die Behälteröffnung 9 in den Mischbehälter 2 eingebracht. Durch die gleichsinnige Drehung der beiden Mischschnecken wird das Futter nach oben transportiert und fließt am oberen Ende der Mischschnecke wieder nach unten. Futter, das eine der beiden geöffneten Austragsöffnungen 12a, 12b erreicht, wird durch diese kontinuierlich ausgegeben.

Die Vorderwand 6 und die Rückwand 7 erstrecken sich schräg nach oben außen, so dass die Behälteröffnung 9 größer ist als der Umriss des Bodens 5. Der Neigungswinkel der Seitenwände 8 ist in Verlängerung einer Verbindungslinie zwischen den Drehachsen 11a, 11b, die parallel zur Fahrtrichtung F verläuft, am größten und verringert sich mit zunehmendem Abstand von dieser Verbindungslinie, bis zu einer dreieckigen, seitlich platzierten Abflachung 14a, 14b, die eben ist, mit ihrer Spitze den Boden 5 berührt und sich im Wesentlichen senkrecht zum Boden 5 erstreckt. Durch die Abflachung 15 wird die Breite des Mischbehälters 2 quer zur Fahrtrichtung F so weit verringert, dass auch enge Stallgassen durchfahren werden können.

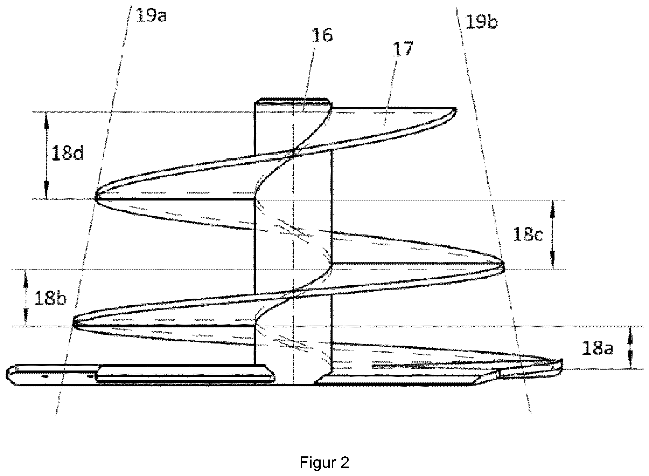

Figur 2 zeigt eine schematische Darstellung einer erfindungsgemäßen Mischschnecke. Die Mischschnecke weist einen rohrartigen Schneckenturm 16 auf, an dem die Schneckenblätter 17 des Schneckengewindes befestigt sind. Die Ganghöhen 18a, 18b, 18c und 18d nehmen schrittweise alle 180 Grad nach oben hin zu, wobei jeder Abschnitt durch ein Blechsegment realisiert ist. Jede der Ganghöhen 18a, 18b, 18c und 18d ist größer als alle darunterliegenden Ganghöhen. Die Ganghöhen können z.B. zwischen 200 mm und 400 mm betragen. Somit würde ein Verhältnis von maximaler Ganghöhe zu minimaler Ganghöhe 2 betragen. Die Verjüngung der Mischschnecke nach oben hin ist durch gestrichelte Linien 19a und 19b angedeutet.

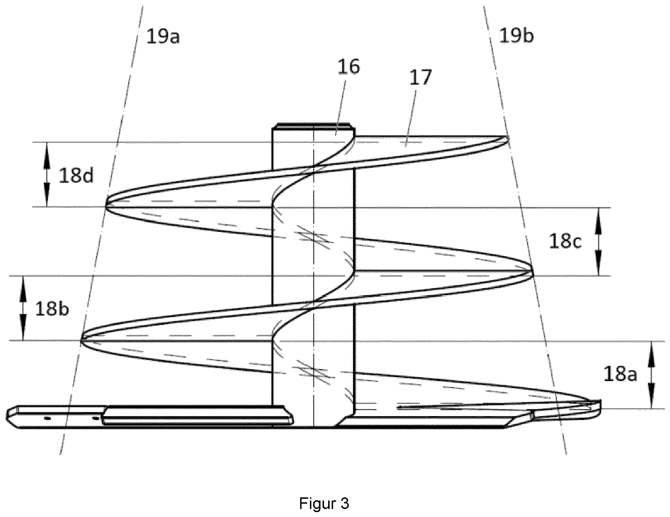

Figur 3 zeigt im Vergleich dazu eine schematische Darstellung einer Mischschnecke wie sie aus dem Stand der Technik bekannt ist, d.h. mit konstanten Ganghöhen. Die Ganghöhen 18a, 18b, 18c und 18d können z.B. alle 225 mm betragen. Die Mischschnecke weist einen rohrartigen Schneckenturm 16 auf, an dem die Schneckenblätter 17 befestigt sind. Die Verjüngung der Mischschnecke nach oben hin ist auch hier durch gestrichelte Linien 19a und 19b angedeutet.

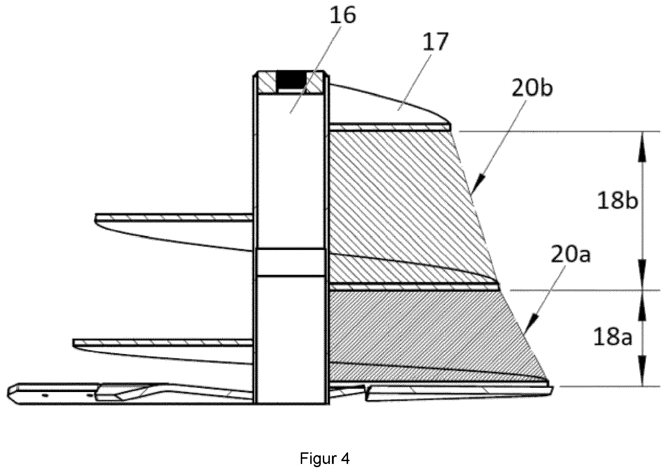

Figur 4 zeigt einen schematischen Querschnitt durch den Schneckenturm 16 einer Mischschnecke mit nach oben hin zunehmender Ganghöhe. Die Querschnittsflächen des Fördervolumens sind durch schraffierte Flächen 20a und 20b gekennzeichnet. Die Querschnittsflächen 20a und 20b mit den entsprechenden Ganghöhen 18a und 18b nehmen nach oben hin zu und wirken somit der Verjüngung der Mischschnecke kompensatorisch entgegen. Die Querschnittsfläche 20a kann z.B. 2300 cm² und die Querschnittsfläche 20b 2900 cm² betragen. Mit anderen Worten bleibt also das Fördervolumen nach oben hin im Wesentlichen konstant oder nimmt sogar zu, so dass kein Futter vorzeitig von der Mischschnecke fließt und damit eine höhere Transportkapazität der Mischschnecke erreicht und ein Zusammenpressen des Futters vermieden werden kann. Außerdem kann durch das zusätzliche Volumen eine Auflockerung des Futters erreicht werden.

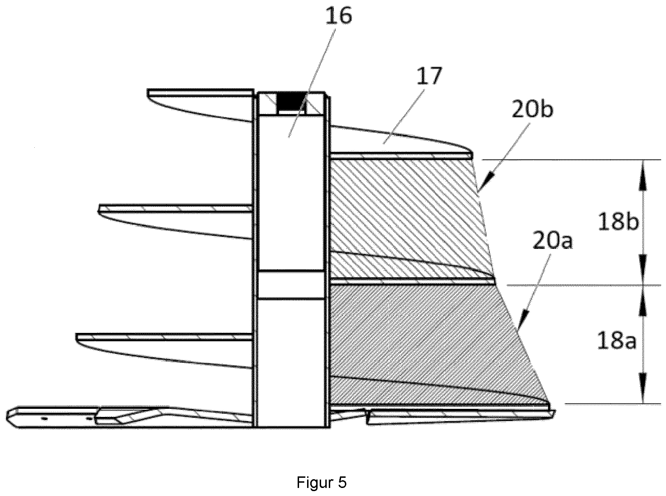

Figur 5 zeigt einen schematischen Querschnitt durch den Schneckenturm 16 der Mischschnecke der Figur 3, also einer aus dem Stand der Technik bekannten Mischschnecke. Die Querschnittsflächen des Fördervolumens sind wiederum durch schraffierte Flächen 20a und 20b gekennzeichnet. Durch die Verjüngung der Mischschnecke nach oben hin, nimmt die Querschnittsfläche des Fördervolumens nach oben hin ab. Die Querschnittsfläche 20a ist kleiner als die Querschnittsfläche 20b. Die Querschnittfläche 20a kann z.B. 2950 cm² und die Querschnittfläche 20b 2350 cm² betragen. Dadurch kommt es zu einer, im Vergleich zur erfindungsgemäßen Mischschnecke, kleineren Transportkapazität der Mischschnecke und ein Zusammenpressen des Futters.

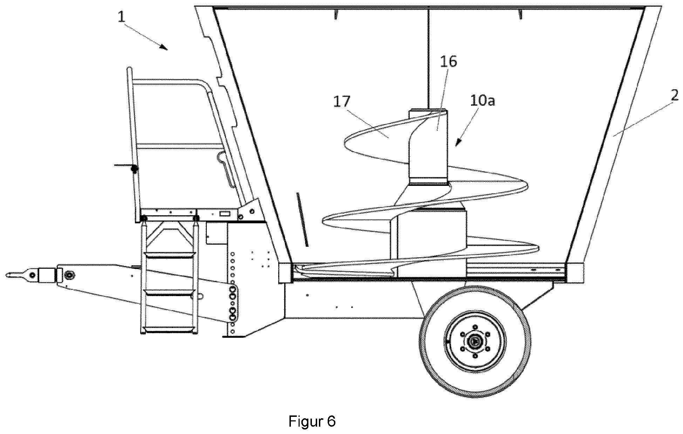

Figur 6 zeigt einen schematischen Futtermischer 1 in der Seitenansicht mit Blick in den Mischbehälter 2, wobei der Mischbehälter 2 eine erfindungsgemäße Mischschnecke 10a umfasst. Der Schneckenturm 16 der Mischschnecke 10a verjüngt sich nach oben hin, so dass der Abnahme der Breite der Schneckenblätter 17 nach oben hin durch die sich verjüngende Mischschnecke 10a entgegengewirkt werden kann. Dadurch kann eine größere Fläche des Schneckenförderers und damit eine höhere Transportkapazität bereitgestellt werden.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

### Bezugszeichenliste

- 1: Futtermischer
- 2: Mischbehälter
- 3: Fahrgestell
- 4: Zugdeichsel
- 5: Boden
- 6: Vorderwand
- 7: Rückwand
- 8: Seitenwände
- 9: Behälteröffnung
- 10a, 10b: Mischschnecke
- 11a, 11b: Vertikale Achse
- 12a, 12b: Austragsöffnung
- 13: Schieber
- 14: Seitlich platzierte Abflachung
- 15: Abflachung
- 16: Schneckenturm
- 17: Schneckenblätter
- 18a, 18b: Ganghöhe
- 19a, 19b: Verjüngung der Mischschnecke
- 20a, 20b: Querschnittsfläche des Fördervolumens
- F: Fahrtrichtung
- S: Drehrichtung

## Patentansprüche

1. Futtermischer (1) zum Mischen von Futter umfassend einen Mischbehälter (2) zur Aufnahme von Futter,
wobei der Mischbehälter (2) einen Boden (5) und eine sich vom Boden (5) nach oben erstreckende Wandung aufweist,
wobei der Mischbehälter (2) wenigstens eine im Mischbehälter (2) drehbar angeordnete Mischschnecke (10a, 10b) umfasst,
wobei die wenigstens eine Mischschnecke (10a, 10b) um eine vertikale Achse (11a, 11b) drehend antreibbar ist,
**dadurch gekennzeichnet, dass**
die Ganghöhe (18a, 18b) der wenigstens einen Mischschnecke (10a, 10b) nach oben hin zunimmt.

2. Futtermischer nach Anspruch 1, wobei die Zunahme der Ganghöhe der wenigstens einen Mischschnecke kontinuierlich und/oder schrittweise erfolgt.

3. Futtermischer nach wenigstens einem der vorangegangenen Ansprüche, wobei die Ganghöhe bei jeder Windung um 10-100%, insbesondere um 20-80%, insbesondere um 25-40%, zunimmt.

4. Futtermischer nach wenigstens einem der vorangegangenen Ansprüche, wobei sich die wenigstens eine Mischschnecke nach oben hin verjüngt.

5. Futtermischer nach Anspruch 4, wobei die Zunahme der Ganghöhe der Verjüngung der wenigstens einen Mischschnecke kompensatorisch entgegenwirkt, indem die Ganghöhe derart zunimmt, dass eine Querschnittsfläche des Fördervolumens gleichbleibt oder zunimmt.

6. Futtermischer nach wenigstens einem der vorangegangenen Ansprüche, wobei das Verhältnis von maximaler Ganghöhe zu minimaler Ganghöhe zwischen 1,2 und 6, insbesondere zwischen 1,4 und 4, insbesondere zwischen 1,5 und 3, liegt.

7. Futtermischer nach wenigstens einem der vorangegangenen Ansprüche, wobei die Schneckenblätter der wenigstens einen Mischschnecke flach oder beckenförmig ausgebildet sind.

8. Futtermischer nach wenigstens einem der vorangegangenen Ansprüche, wobei der Futtermischer ein gezogener oder selbstfahrender Futtermischwagen, ein Futterroboter oder eine stationäre Mischanlage ist.

9. Futtermischer nach wenigstens einem der vorangegangenen Ansprüche, wobei sich der Schneckenturm der wenigstens einen Mischschnecke nach oben hin verjüngt.

10. Futtermischer zum Mischen von Futter, umfassend einen Mischbehälter zur Aufnahme von Futter, wobei der Mischbehälter einen Boden und eine sich vom Boden nach oben erstreckende Wandung aufweist, wobei der Mischbehälter wenigstens eine im Mischbehälter drehbar angeordnete Mischschnecke umfasst und wobei die wenigstens eine Mischschnecke um eine vertikale Achse drehend antreibbar ist,
**dadurch gekennzeichnet, dass**
die wenigstens eine Mischschnecke eine variable Ganghöhe aufweist.
